# EUROPEAN PATENT SPECIFICATION

(11) **EP 4 209 128 B1**
(45) Date of publication and mention of the grant of the patent: **05.11.2025**
(21) Application number: 23150261.8
(22) Date of filing: 04.01.2023
(51) Int. Cl.: A21C 3/04, A21C 11/18

(54) **METERING MACHINE FOR METERING AND/OR INJECTING FOOD PRODUCTS**
DOSIERMASCHINE ZUM DOSIEREN UND/ODER INJIZIEREN VON NAHRUNGSMITTELN
MACHINE DE DOSAGE POUR DOSER ET/OU INJECTER DES PRODUITS ALIMENTAIRES

(30) Priority: 05.01.2022 IT 202200000119
(43) Date of publication of application: 12.07.2023
(73) Proprietor: GEA COMAS S.P.A., 36036 Torrebelvicino (Vicenza) (IT)
(72) Inventor: SANTACATTERINA, Sergio, 36036 Torrebelvicino (VI) (IT); LAPO, Dario, 36015 Schio (VI) (IT)
(74) Representative: Dondi, Silvia

(56) References cited:
- EP-A1- 3 512 344
- EP-B1- 2 251 178
- CN-A- 101 862 018
- IT-B- 1 234 903
- US-A1- 2019 208 792

## Description

### Field of application

The object of the present invention is a metering machine for metering and/or injecting food products according to the preamble of the main independent claim.

The present metering machine is intended to be advantageously employed in the field of the food industry for metering and/or injecting, in an at least partially automatic manner, food doughs, e.g. of cookies, muffins, cupcakes or similar products, or of creams or other food products onto suitable conveyor belts for the subsequent operations of baking/cooking and packaging.

The present metering machine is also intended to be advantageously employed in the field of the food industry for injecting bakery products after baking/cooking with products such as creams, marmalades, chocolates and similar food fluids.

The metering machine, object of the present invention, is therefore inserted in the industrial field of production of machines for the food industry and, in particular, in the industrial field of production of machines for the confectionary industry.

### State of the art

In the food field, and in particular in the confectionary field, metering machines are known for metering dough food products, which therefore allow dispensing a measured dose of a food dough/paste onto a conveyor belt, for the subsequent steps of baking/cooking and packaging.

More in detail, roller metering machines are known (an example of which being described in the document IT 1234903) which comprise a support structure, on which a metering group is mounted, integral with the latter, comprising a hopper for containing a food product, a plurality of dispensing nozzles placed below the hopper and a pair of counter-rotating rollers, which are placed within the hopper and are actuatable in rotation in order to force the food product contained within the hopper towards the dispensing nozzles.

For such purpose, the metering machines of known type comprise a motor, fixed to the metering group and mechanically connected to the pair of rollers in order to actuate them in rotation.

The roller metering machines of known type have in practice proven that they do not lack drawbacks. The main drawback lies in the fact that such metering machines require a lot of time for the disassembly of the metering group.

In particular, the disassembly of the metering group is made necessary not just for carrying out mechanical maintenance operations and for substituting the metering group in case of failures or malfunctions, but also for the normal cleaning operations, which must be carried out each time it is desired to change the food product to be metered, as well as at regular intervals for the normal maintenance of the machine.

The aforesaid metering machines of known type in fact require long disassembly times before being able to carry out the cleaning operations due to the arrangement of the motor directly on the metering group.

It is in fact necessary to disassembly the aforesaid motor (as well as the relative electrical component) before the cleaning, both in order to facilitate the transport of the metering group towards a washing site and of course in order to prevent the electrical components from being ruined during the aforesaid operations.

Also known, from document US 2019/0208792, is a metering machine in which the metering group is provided with a bladed shaft which is placed within a cavity positioned below the hopper and is actuatable to rotate in order to extract the food product from the hopper and force it outside underlying outlet openings.

Also known, from document EP 2251178, is an extruder comprising a screw extruder cylinder internally provided with two work screws actuatable in rotation in order to extrude a pasty product.

Also known from document CN 101862018 is a metering machine which comprises metering group provided with a base rigidly fixed to a support structure (on which a conveyor belt is arranged) and carrying a hopper mounted thereon. The base is provided with multiple vertical openings connected to the hopper in order to receive the food product and multiple transverse openings which intersect the aforesaid vertical openings and house corresponding pistons actuatable for forcing the food product to pass from the hopper to underlying outlet openings.

Also these solutions of known type, however, have problems tied to the disassembly of the metering group.

In order to at least partially overcome the abovementioned drawbacks, roller metering machines have been developed that are provided with an extractable metering group, and in particular in which the actuations necessary for the movement of the counter-rotating rollers are fixed to the support structure of the metering machine.

One example of roller metering machine with extractable metering group is described in the patent EP 3512344.

The apparatus described herein comprises a support structure, a metering group removably connected to the support structure, and in particular slidable on two parallel rails of the support structure.

The metering group comprises a support frame, a hopper for containing food products to be metered, multiple dispensing nozzles for dispensing the food product, and a pair of counter-rotating rollers, placed within the hopper and arranged for forcing the food product to exit from the dispensing nozzle of the metering group in order to meter it onto a conveyor belt.

The metering machine described in the patent EP 3512344 also comprises actuation means mounted on the support structure, removably connected to the pair of rollers and arranged for actuating in rotation the latter.

Also the above-described machine, however, has in practice proven that it does not lack. The main drawback lies in the fact that such roller metering machine has proven unsuitable for metering food products provided with a liquid or semi-liquid consistency.

Indeed the counter-rotating rollers are unable to suitably meter liquid or semi-liquid food products, which tend to drip even when the rollers are not actuated, causing a waste of food product and dirtying the conveyor belt placed below.

A further drawback lies in the fact that the aforesaid roller metering machine has demonstrated to be not very precise in metering, in particular of food products with reduced viscosity, such as for example liquid or semi-liquid food products.

Indeed, the counter-rotating rollers are actuatable in rotation in order to force the dough towards the dispensing nozzles but they do not allow selecting with precision the food product dose to be dispensed on the conveyor belt and therefore they have demonstrated to be poorly suitable for applications where a precise metering is necessary.

### Presentation of the invention

The problem underlying the present invention is therefore that of eliminating the drawbacks of the abovementioned prior art, by providing a metering machine for food products, which also allows metering food products with reduced viscosity, such as in particular liquid or semi-liquid food products.

Another object of the present invention is to provide a metering machine for food products, which allows a precise and constant metering of the food product contained in the hopper.

A further object of the present invention is to provide a metering machine for food products, which allows a facilitated separation of the metering group from the support structure in order to carry out the cleaning operations.

A further object of the present invention is to provide a metering machine for food products, which allows reducing the necessary times of ordinary and extraordinary maintenance on the metering group.

A further object of the present invention is to provide a metering machine for food products, which is inexpensive to attain.

A further object of the present invention is to provide a metering machine for food products, which is simple and entirely reliable in operation.

These objects and still others are attained by the metering machine for food products according to the present invention.

### Brief description of the drawings

The technical characteristics of the invention, according to the aforesaid objects, can be clearly seen in the contents of the below-reported claims and the advantages thereof will be more evident in the following detailed description, made with reference to the enclosed drawings, which represent a merely exemplifying and non-limiting embodiment of the invention, in which:

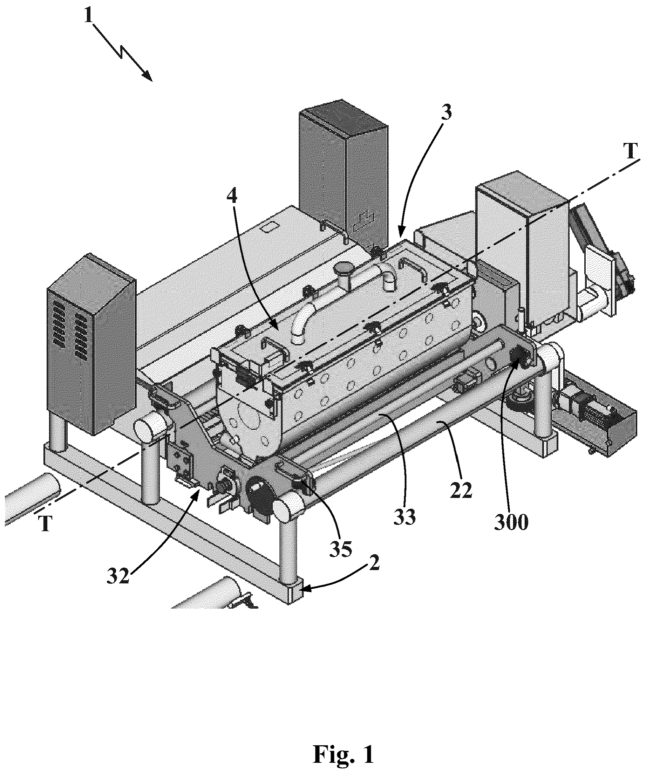

- figure 1 illustrates a perspective view of a metering machine according to the present invention, in accordance with a first embodiment;

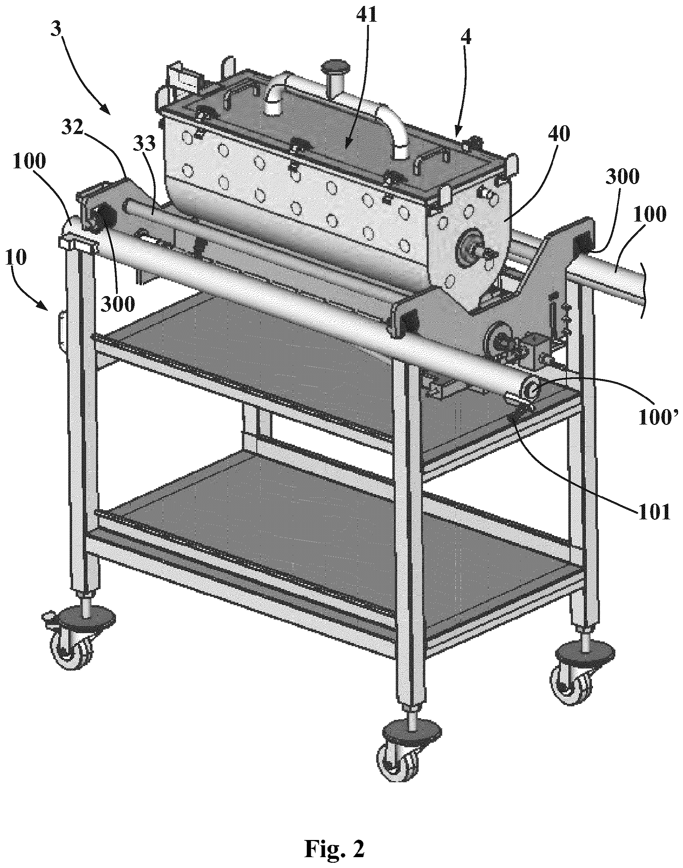

- figure 2 shows a second perspective view of the metering machine of figure 1 mounted on a trolley;

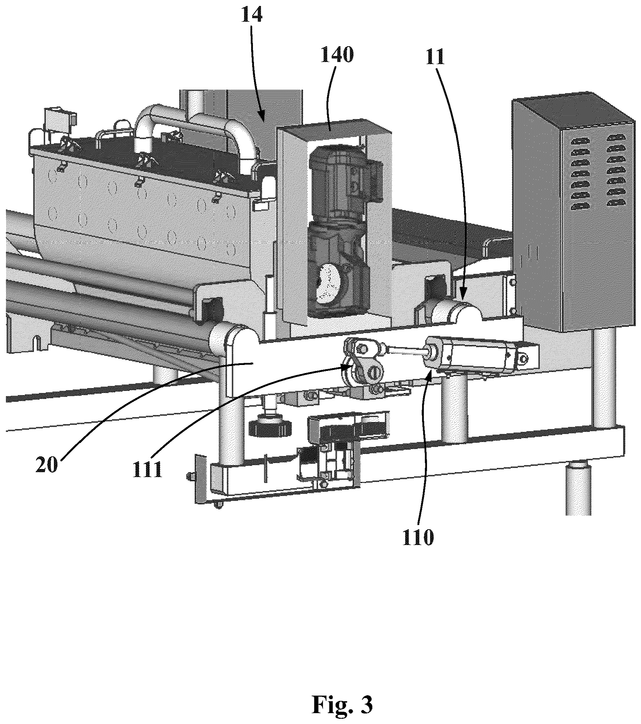

- figure 3 shows a detail of the metering machine of figure 1, relative to first movement means;

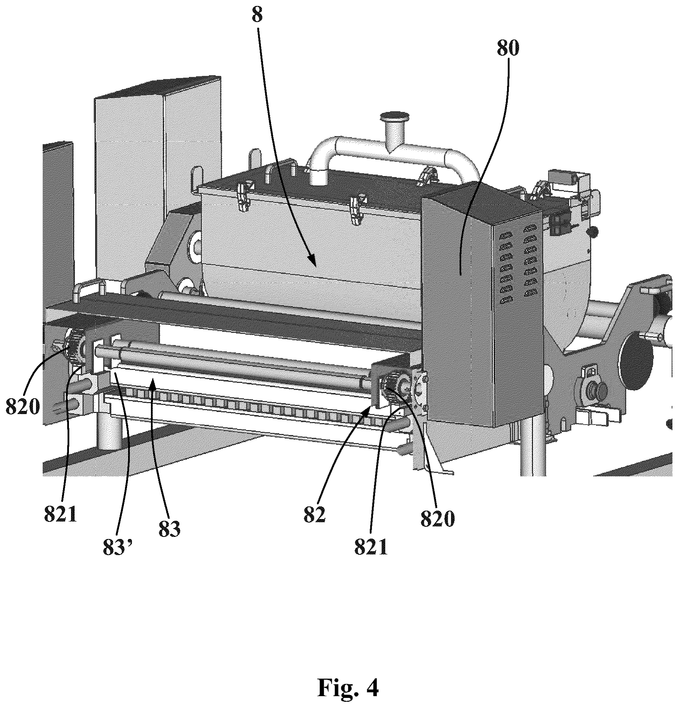

- figure 4 illustrates a sectional view of the metering machine of figure 1, in particular showing actuation means;

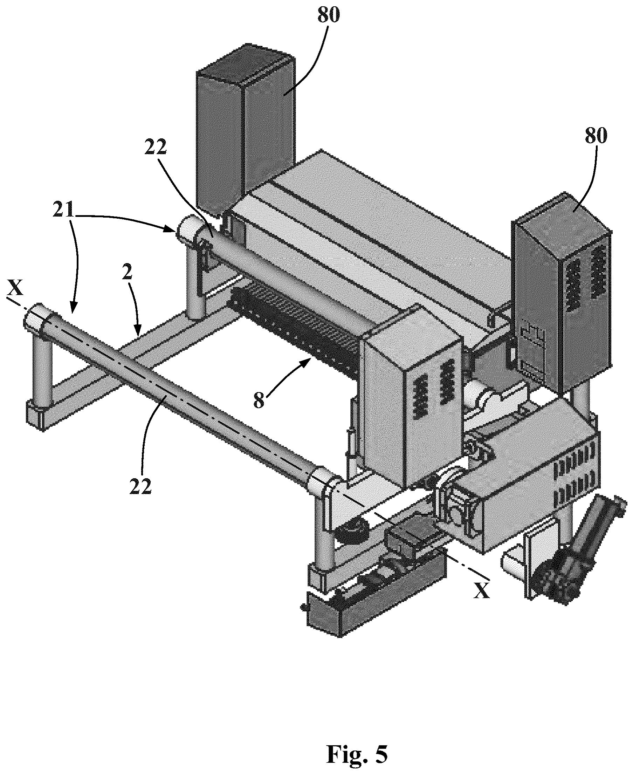

- figure 5 illustrates a perspective view of a support structure of the metering machine of figure 1, with a metering group extracted;

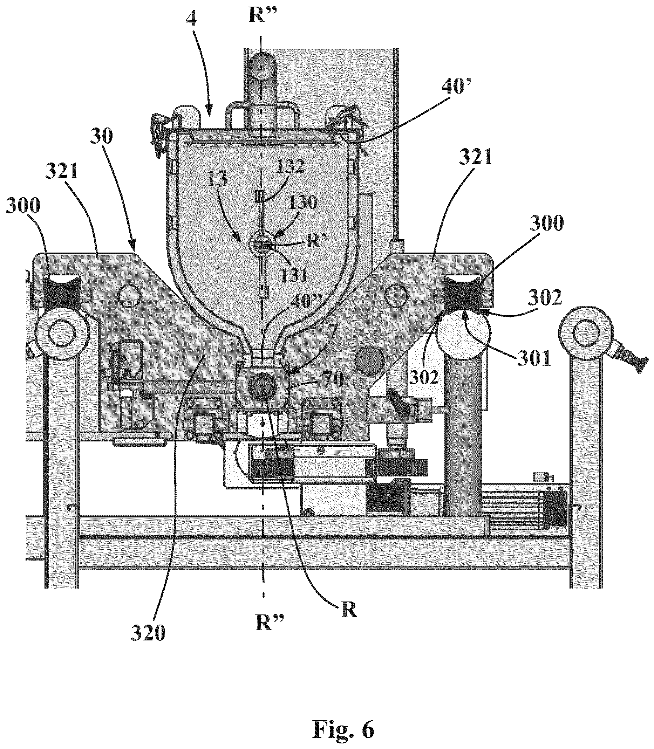

- figure 6 illustrates a sectional view of a hopper and of hydraulic connection means of the metering machine of figure 1;

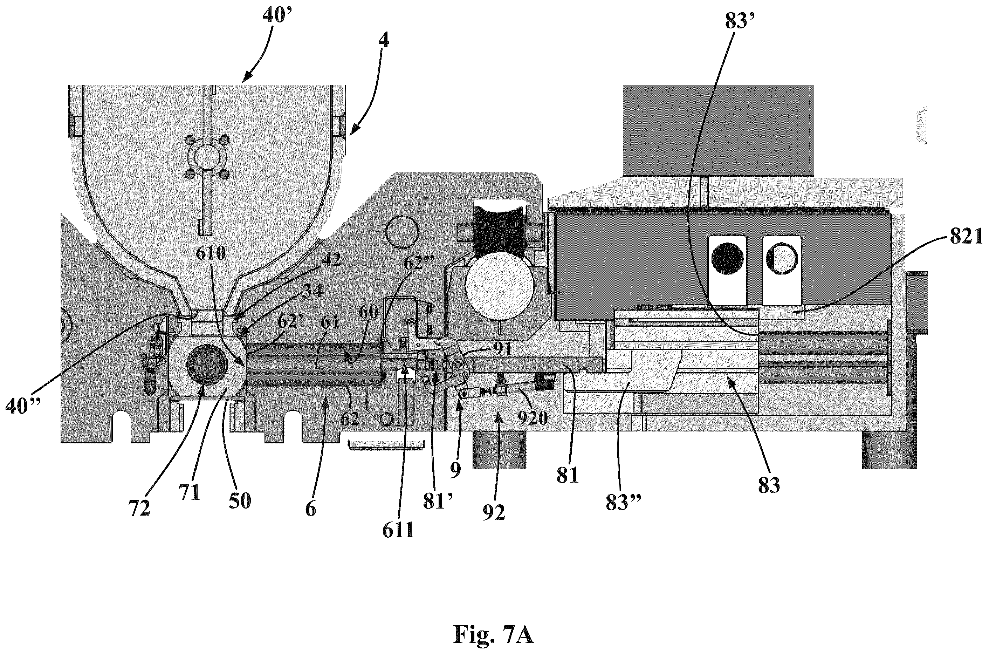

- figure 7A illustrates a sectional view of coupling means, actuation means and pistons of the metering machine of figure 1;

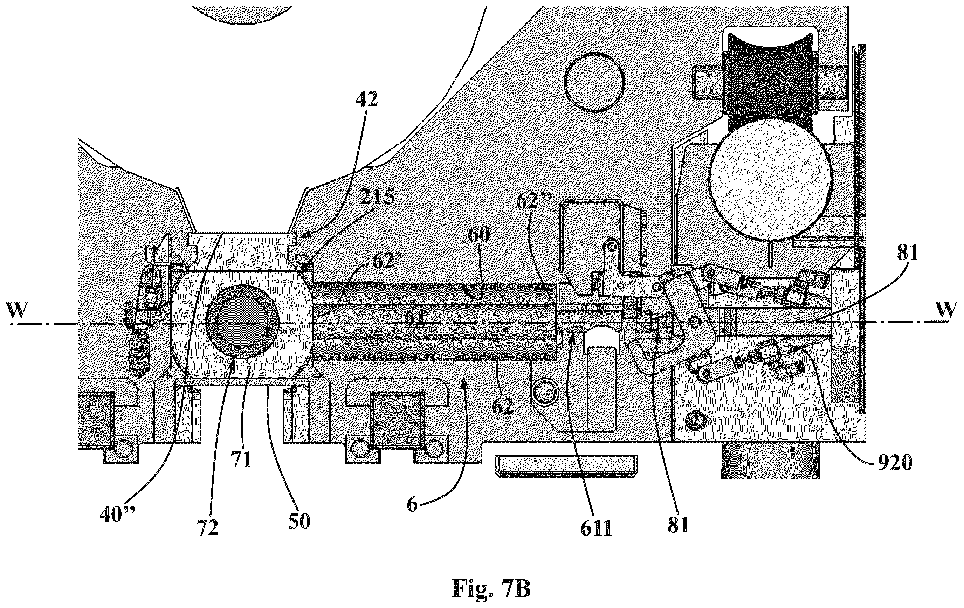

- figure 7B illustrates an enlargement of a portion of figure 7A;
- figure 8 illustrates a further enlargement of a portion of figure 7B;

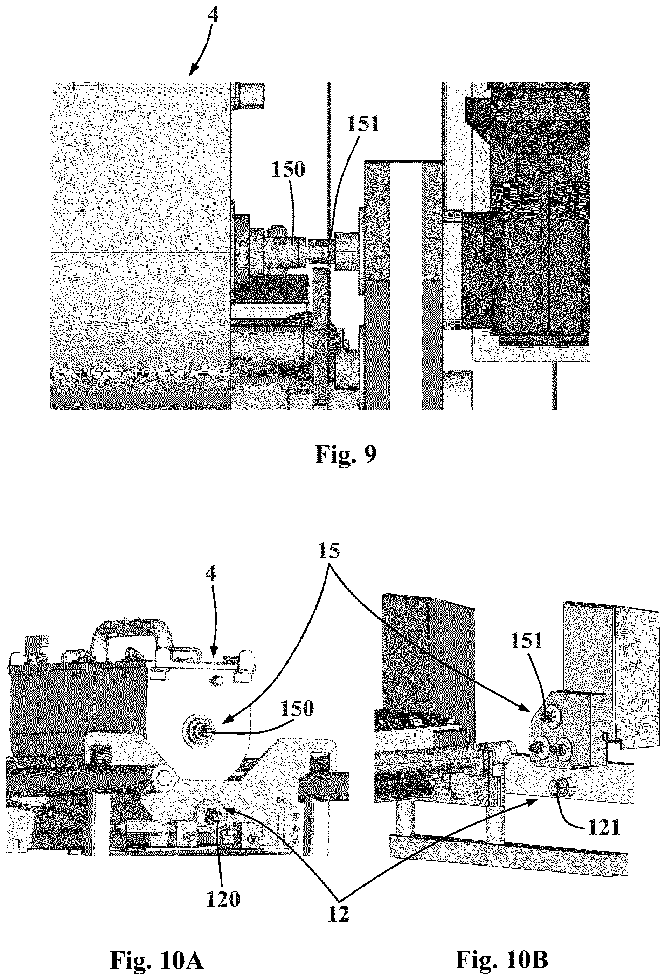

- figure 9 illustrates a detail of the metering machine of figure 1, relative to second coupling means
- figures 10A and 10B show a perspective view of the metering machine of figure 1, with several parts removed in order to better illustrate other parts;
- figure 11 illustrates a perspective view of a metering machine according to a second embodiment, in particular suitable for injecting a food product.

### Detailed description of a preferred embodiment

With reference to the enclosed drawings, reference number 1 overall indicates the metering machine for metering and/or injecting food products, object of the present invention.

The metering machine 1, object of the present invention, is intended to treat food products made of doughs/pastes of various consistency and composition, such as for example doughs, mixtures, batter for cakes and filling, e.g. for pie bottoms.

More in detail, the metering machine 1, object of the present invention, is advantageously adapted to distribute a measured dose of a dough/paste food product, preferably with low viscosity, in particular for the preparation of cookies, muffins, cakes and cupcakes.

More in detail the metering machine 1 is configured for depositing the aforesaid measured dose of dough on a conveyor belt, not represented, for the subsequent steps of preparation and baking/cooking so as to obtain a finished food product.

The metering machine 1 is also advantageously adapted for injecting a measured dose of food products, such as for example cream, chocolate, marmalade or garnishes in general, within an already-baked food product, such as for example croissants or the like.

For such purpose the metering machine 1, object of the present invention, is preferably intended to be installed in a line for the production of finished products of food type, in particular confectionary products.

According to the present invention, the metering machine 1 for metering food products comprises a support structure 2 (e.g. a metal framework), provided with guide means 21, preferably extended along a first main extension direction X (preferably horizontal). The metering machine 1 also comprises a movable metering group 3 comprising a support frame 30, removably and slidably mounted on the guide means 21 of the support structure 2 in order to be moved between an operative position A and a maintenance position B, preferably along an extraction direction T substantially parallel to the first main extension direction X.

In particular, the support structure 2 is considered fixed, where with the term "fixed" it is advantageously to be intended that the support structure 2 is fixed with respect to the metering group 3, i.e. the support structure 2 is considered as a fixed reference system for the metering group 3, in the sense that, by considering an assembly given by the support structure 2 and by the metering group 3, such assembly is considered inserted in a reference system where the support structure 2 is assumed to be fixed.

In particular, the support structure 2 can support moving members such as for example pistons, as specified hereinbelow.

In the event in which the metering machine 1 is employed for metering food products the support structure 2 is advantageously fixed, during use, also with respect to the ground and preferably is intended to be abutted against the ground, in particular within an industrial plant for the production of food products. More in detail, the metering machine 1 preferably being placed within an automated food product production line, the support structure 2 is advantageously movable in order to allow an easy reorganization of the aforesaid automated line.

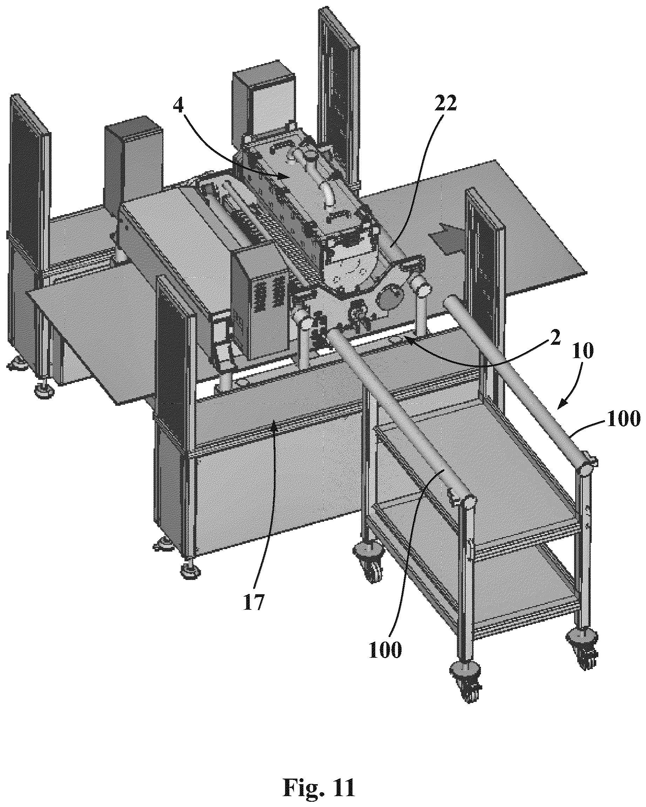

Alternatively, in the event in which the metering machine 1 is intended to inject food products, as mentioned above, the support structure 2 is mounted on a support base 17 and is movable with respect to the latter, in particular at least vertically, away from and close to the conveyor belt, so as to move the entire metering machine 1 with respect to the conveyor belt on which it is placed in order to allow the operations of injection of the garnish within the food product, as is better illustrated in figure 11.

As set forth above, the metering group 3 is removably connected to the support structure 2 and is therefore movable with respect to the latter. More in detail, the metering group 3 is advantageously movable with respect to the support structure 2 in order to be separated from the latter so as to be transferred into a suitable dedicated site for the normal cleaning operations of the metering group 3. This advantageously allows facilitating the aforesaid cleaning operations since, in addition to reducing the weight to be transported, it simplifies the separation of the metering group 3 from the support structure 2 and therefore allows reducing the machine stop time, thus increasing the productivity thereof.

More in detail, as set forth above, the support frame 30 is movable between an operative position A and a maintenance position B.

More in detail, in the operative position A, the metering group 3 is engaged with the support structure 2 for metering the food product while in the aforesaid maintenance position B the metering group 3 is placed distal from the aforesaid operative position A and is at least partially disengaged from the support structure 2, such that it can be separated from the support structure 2 in order to be able to be transferred to the cleaning site.

Advantageously, the guide means 21 of the support structure 2 comprise at least two first rails 22, which are preferably parallel to each other and are extended substantially parallel to the first extension direction X and to the extraction direction T.

The support frame 30 advantageously comprises at least two slide elements 300, each of which is slidably associated with one of the first rails 22 of the support structure 2, in order to guide the movement of the support frame 30 along the support structure 2 between the operative position A and the maintenance position B.

Advantageously the support frame 30 comprises a first and a second main support element 32, which are placed preferably orthogonal to the first extension direction X, substantially parallel to and spaced from each other.

The support frame 30 also advantageously comprises at least one stiffening element 33, preferably tubular, substantially extended parallel to the first extension direction X, interposed between the two main support elements 32 and fixed to the latter.

Preferably, in accordance with the preferred embodiment, each main support element 32 of the support frame 30 has substantially plate-like shape, is advantageously provided with a central portion 320 and with two lateral arms 321, which are extended laterally projecting from the central portion 320, in particular from opposite sides of the latter. Preferably, the two lateral arms 321 are extended from the central portion 320 along a direction that is tilted with respect to the latter and away from the ground, with at least one component oriented vertically. In addition the two lateral arms 321 are extended preferably projectingly from an upper end of the central portion 320 and preferably each of the two lateral arms 321 carries mounted thereon at least one of the slide elements 300.

Advantageously, the support frame 30 is therefore shaped in a manner such that, when it is mounted on the support structure 2, the central portion 320 of the main support element 32 is placed substantially below the rails 22.

The support frame 30 advantageously comprises two stiffening elements 33, each of which is preferably interposed between two lateral arms 321 of two opposite main support elements 32.

The support frame 30 also advantageously comprises at least one support element 34, substantially tubular, which is fixed between two opposite main support elements 32, preferably between the two central portions 320 of the aforesaid main support elements 32.

The support frame 30 preferably comprises four slide elements 300, including two front slide elements 300, mounted on two opposite lateral arms 321 of the first main support element 32, and two rear slide elements 300, mounted on two opposite lateral arms 321 of the second main support element 32.

More in detail, each slide element 300 is rotatably connected to the corresponding lateral arm 321, for example by means of a rotatable pin, and is susceptible of being placed in abutment against a corresponding first rail 22 in order to slide on the latter and allow the sliding of the support frame 30 along the support structure 2.

Preferably the first rails 22 have cylindrical shape and are therefore provided with an external slide surface that is substantially cylindrical.

Each slide element 300 advantageously comprises a slide roller, which is preferably provided with an external abutment surface intended to slide on the corresponding first rail.

Preferably each slide element 300 comprises a central abutment portion 301, substantially cylindrical and provided with a first external diameter, and two lateral guide portions 302, flanked on opposite sides to the aforesaid central abutment portion 301 and provided with a second external diameter greater than the first external diameter of the central abutment portion 301. In this manner each slide roller 300 defines an external abutment surface that is substantially counter-shaped with respect to the external slide surface of the first rail 22 and is therefore laterally guided along a direction substantially orthogonal to the extraction direction T, during its sliding along the aforesaid first rail 22 along the extraction direction T.

Of course, without departing from the protective scope of the present invention, the slide elements 300 can comprise wheels or equivalent slidable elements, i.e. for example a roller shaped in a single body with concave lateral profile.

The support frame 30 also comprises at least one grip handle 35, and preferably two grip handles 35, each of which is preferably made at a separate lateral arm 321 of the main support element 32 and is fixed to the corresponding lateral arm 321 in order to facilitate the movement of the metering group 3 along the extraction direction T and in order to facilitate its lifting.

The metering machine 1 advantageously comprises a support trolley 10, provided with at least two second rails 100, substantially parallel to each other, on which the support frame 30 is susceptible of sliding.

More in detail, the support trolley 10 is advantageously flankable to the support structure 2, with the second rails 100 placed preferably parallel to the first extension direction X and substantially aligned with the first rails 22 of the support structure 2, in order to support the metering group 3 following its separation from the support structure 2.

The second rails 100 are preferably also of cylindrical form so as to define an external slide surface substantially continuous with the external slide surface of the first rails 22. In this manner the above-described slide elements 300 are guided laterally also during their sliding along the second rails 100.

Advantageously the first rails 22 and the second rails 100 are provided with mutual coupling portions, preferably of male-female type, which are adapted to maintain the first rails 22 and the second rails 100 aligned with each other during the movement of the metering group 3. For example, in a non-limiting manner, the second rails 100 are advantageously provided, at an end thereof susceptible of being directed towards the first rails 22, with a first coupling portion 100', projecting and having preferably cylindrical form, while the first rails 22 are advantageously provided with a second coupling portion, preferably made in a depression along a direction substantially parallel to the first main extension direction X and substantially counter-shaped with respect to the first coupling portion 100' made on the second rail 100 facing and aligned therewith. In this manner the first and the second coupling portions advantageously allow a substantially fitting engagement between the first rails 22 and the second rails 100, preventing the misalignment thereof.

Of course, without departing from the protective scope of the present invention, the first coupling portions 100' and the second coupling portions can be reversed with respect to each other, for example preventing the first rails 22 from being provided with a projecting coupling portion while the second rails 100 are provided with a second coupling portion made in a depression.

Advantageously the support trolley 10 is provided with connection means 101, which are preferably fixed to the second rails 100 of the support trolley 10 and comprise a connection element, advantageously movable in order to engage the corresponding first rail 22, retaining the first rails 22 and the second rails 100 flanked and aligned with each other.

For example, in a non-limiting manner, the connection means 101 advantageously comprise a threaded pin which is fixed, by means of a suitable connection element, to a corresponding second rail 100 and is susceptible of being inserted, via screwing, within a threaded hole made on the corresponding first rail 22, therefore fixing together the first rails 22 and the second rails 100 and allowing an easier extraction of the metering group 3.

Of course the connection means 101 can be of different type with respect to those described above, for example by providing for an L-shaped element, rotatably connected to one between the first rails 22 and the second rails 100 and engageable in a suitable seat made on the other rail 22, 100.

The metering group 3 also comprises at least one hopper 4 for containing a food product, preferably a food dough, and such hopper 4 is mechanically connected to the support frame 30.

Advantageously the hopper 4 is mechanically connected to the support element 34 of the support frame 30 and is preferably placed in abutment against the latter.

The hopper 4 advantageously comprises a central body 40, at least partially blind and internally defining a containment volume for containing the food product to be metered, and such central body 40 is extended preferably tapered between an upper access mouth 40' and a lower discharge mouth 40". Preferably, the hopper 4 comprises a closure cover 41, placed above the central body 40, at least as a partial closure of the access mouth 40' of the central body 40 and of the containment volume. The cover 41 is also advantageously provided with at least one opening that is hydraulically connectable, for example by means of a duct, preferably metallic, to a container of the food product to be metered. Preferably the cover 41 comprises two separate openings, each of which hydraulically connectable to the tank or alternatively to two different tanks, each susceptible of containing a separate food product to be metered. In particular, in the event in which the central body 40 is hydraulically connectable by means of two separate openings to two tanks containing food products to be metered, the hopper 4 is advantageously provided with at least one separator partition, not illustrated, placed within the central body 40 in order to separate the containment volume inside said central body 40 into two half-volumes, one for each food product to be metered.

Of course, it is also possible that the hopper 4 be susceptible of containing more than two food products to be metered and for such purpose the cover 41 can comprise a suitable number of openings and the hopper 4 be provided with a suitable number of separator partitions.

The hopper 4 advantageously comprises a closure plate 42, placed below the central body 40 and advantageously fixed thereto. The closure plate 42 is preferably provided with a central cavity that is counter-shaped with respect to the discharge mouth 40" of the central body 40 in order to allow the passage of the food product to be metered from the central body 40.

The closure plate 42 is advantageously abutted against the support element 34 of the support frame 30 and mechanically connected to the latter, preferably by means of a mechanical snap coupling device well-known to the man skilled in the art and therefore not described in detail hereinbelow.

The metering group 3 also comprises a plurality of dispensing nozzles, not represented in the enclosed figures, mechanically connected to said support frame 30 and each of which preferably defines a dispensing opening.

Advantageously, in particular in the event in which the metering machine 1 is employed for injecting food products, a corresponding injection syringe is mounted on each dispensing nozzle, at the aforesaid dispensing opening, which is extended towards the conveyor belt in order to intercept a food product and allow the injection of a garnish at its interior. The dispensing nozzles and the possible injection syringes are well-known to the man skilled in the art, and depend on the type of food product to be metered and on the shape that one wishes to obtain on the finished product, and will therefore not be described in detail hereinbelow.

More in detail, the dispensing nozzles are preferably mechanically connected to the support element 34 of the support frame 30, below the latter and hence preferably opposite the hopper 4 with respect to the same support element 34.

For such purpose the support element 34 is preferably a tubular element, which is preferably provided with a square or circular section.

The tubular element of the support element 34 is advantageously internally at least partially hollow and defines an internal housing volume, in order to allow the passage of the food product to be metered from the hopper 4 towards the dispensing nozzles.

The metering group 3 advantageously comprises a support body 50, preferably with substantially plate-like form, on which the plurality of dispensing nozzles is mounted, spaced from each other and preferably equidistant along the support body 50.

Advantageously, the support body 50 is extended along a direction substantially parallel to the first main extension direction X, preferably for the entire length of the central body 40 of the hopper 4.

The support body 50 is preferably slidably connected on the lower part to the support element 34 such to be easily removed from the latter in order to be substituted or be washed at the end of the metering of the food product.

For such purpose the support element 34 is advantageously provided with two longitudinal retention shoulders, not shown, which are extended along a direction substantially parallel to the first main extension direction X, while the support body 50 is preferably provided with two opposite retention shoulders, counter-shaped with respect to the slide shoulders of the support element 34 and susceptible of slidably engaging the latter in order to retain the support body 50 connected, preferably substantially hung, to the support element 34.

In accordance with the idea underlying the present invention, the metering group 3 also comprises a plurality of pistons 6 for the metering of the food product, each mechanically connected to the support frame 30.

More in detail, the pistons 6 are advantageously mechanically connected to the support element 34, on a lateral face of the latter which is preferably orthogonal to the faces of the support element 34 facing the hopper 4 and the dispensing nozzles.

Each piston 6 also comprises a containment chamber 60, selectively and hydraulically connectable to the hopper 4 and the dispensing nozzles, and a stem 61 sealingly slidable (with linear motion) within the containment chamber 60 between a suction position, in which the stem 61 suctions the food product from the hopper 4 within the containment chamber 60, and a dispensing position, in which the stem 61 forces the food product from the containment chamber 60 to the plurality of nozzles.

In particular, each stem 61 is slidable in the containment chamber 60 along a rectilinear slide direction, which is orthogonal to the extraction direction T of the support frame 30 and to the first main extension direction X of the support structure 2 and, preferably. is substantially horizontal.

More in detail, each piston 6 preferably comprises a jacket 62, preferably with cylindrical form, which at its interior defines the aforesaid containment chamber 60. Each jacket 62 is advantageously fixed to the support element 34, for example by means of welding, and the jackets 62 are preferably placed spaced from each other, preferably along the entire extension of the support element 34.

Advantageously each dispensing nozzle corresponds with a piston 6 and thus a jacket 62, which is preferably aligned with the corresponding dispensing nozzle along the support element 34.

Each jacket 62 is advantageously extended between a front opening 62' and an opposite rear opening 62", within which stem 61 is at least partially housed, which is slidable within the aforesaid jacket 62. The stem 61 is substantially inserted to size within the containment chamber 60 defined by the jacket 62. In particular, the jacket 62 defines an internal surface, which laterally delimits the containment chamber 60 while the stem 61 defines an external surface, which is preferably placed in abutment against the internal surface of the jacket 62 in order to prevent the food product that is situated within the containment chamber 60 from exiting outward, and in particular leaking, towards the rear opening 62" of the jacket 62.

For such purpose, the stem 61 can be provided with a seal element, for example a gasket, preferably annular, which is pressed against the internal surface of the jacket 62 in order to improve the hydraulic seal of the aforesaid stem 61 - jacket 62 coupling.

Each stem 61 is advantageously extended between a head portion, which is housed within the containment chamber 60 of the jacket 62, and a shank portion 611, preferably with elongated shape, which is placed at least partially outside the aforesaid containment chamber 60.

The metering group 3 also comprises hydraulic connection means 7 mechanically connected to the support frame 30, hydraulically interposed between the hopper 4, the containment chambers 60 of the pistons 6 and the dispensing nozzles in order to selectively place the containment chambers 60 in hydraulic communication with the hopper 4 and with the dispensing nozzles.

More in detail, the hydraulic connection means 7 advantageously comprise at least one three-way valve 70. Advantageously the three-way valve 70 is extended along a second main extension direction Y, which is substantially parallel to the first main extension direction X. The three-way valve 70 is preferably housed within the internal housing volume of the support element 34. More in detail, at least one main support element 32 is provided with an insertion opening, which is communicating with the internal housing volume of the support element 34 and is susceptible of being at least partially traversed by the three-way valve 70 in order to allow the housing thereof within the aforesaid support element 34.

The three-way valve 70 is advantageously rotatably connected to the support frame 30 and rotatable around a first rotation axis R between at least one first position, in which the three-way valve 70 is placed as a hydraulic connection between the containment chamber 60 of the pistons 6 and the hopper 4, and a second position, in which the three-way valve 70 is placed as a hydraulic connection between the containment chamber 60 of the pistons 6 and the dispensing nozzles. The metering machine 1 advantageously comprises first movement means 11, mounted on the support structure 2, removably connectable to the three-way valve 70 in order to rotate the three-way valve 70 between the first position and the second position.

More in detail, the three-way valve 70 advantageously comprises a stator element 71, preferably tubular, which is fixed to the support frame 30 and in particular to the support element 34.

The stator element 71 preferably has an external shape counter-shaped with respect to the internal shape of the support element 34. For example, the stator element 71 has a polygonal external shape, preferably square, and the support element 34 and an internal shape, also polygonal, and preferably square, so as to prevent the rotation of the stator element 71 with respect to the support element 34 around the first rotation axis R.

Alternatively it is possible to provide for the stator element 71 with a substantially external shape and provide for suitable fitting means interposed between the stator element 71 and the support frame 30, in particular with the support element 34, in order to prevent the mutual rotation thereof.

Of course, in a preferred but non-limiting manner, the insertion opening made on the main support element 32 is advantageously counter-shaped with respect to the external shape of the stator element 71.

The stator element 71 is advantageously provided with a plurality of first openings, which are directed towards the discharge mouth 40" of the central body 40 of the hopper 4 and, in case of multiple discharge mouths 40" spaced from each other along the central body 40, each first opening is preferably aligned with a corresponding discharge mouth 40" along a vertical direction.

The stator element 71 is advantageously provided with a plurality of second openings, which are directed towards the pistons 6 and each second opening is preferably aligned with a corresponding containment chamber 60.

The stator element 71 is advantageously provided with a plurality of third openings, which are directed towards the dispensing nozzles and each third opening is preferably aligned with a corresponding dispensing opening of a corresponding dispensing nozzle.

The three-way valve 70 also comprises a rotary element 72 which is advantageously rotatable around the first rotation axis R between at least the first position and the second position. More in detail, the stator element 71 is at least partially internally hollow, defines at its interior a housing cavity within which the rotary element 72 is housed, rotatably connected thereto.

In particular, the stator element 71 preferably defines a housing cavity substantially cylindrical. Advantageously the rotary element 72 has cylindrical shape and is preferably counter-shaped with respect to the housing cavity of the stator element 71.

The rotary element 72 is advantageously extended between a first end, at least partially projecting from the stator element 71 in which the rotary element 72 is housed, and an opposite second end.

The rotary element 72 advantageously comprises a first row of openings, placed aligned with and spaced from each other, preferably along the entire extension of the rotary element 72.

The rotary element 72 also advantageously comprises a second row of openings, placed aligned with and spaced from each other, preferably along the entire extension of the rotary element 72.

The rotary element 72 also advantageously comprises a plurality of transport ducts, each of which is placed as a hydraulic connection between an opening of the first row of openings and a corresponding opening of the second row of openings.

Advantageously the first row of openings and the second row of openings are placed circumferentially spaced on the rotary element 72, preferably with an angle of about 90°, in a manner such that during the rotation a row of openings is placed facing the second openings, while the other row of opening is placed selectively facing the first openings or the third openings.

In this manner, in operation, the rotation of the rotary element 72 of the three-way valve 70 allows selectively placing the containment chamber 60 of the pistons 6 and the hopper 4 in hydraulic communication with the three-way valve 70 in the first position, or the containment chamber 60 of the pistons 6 and the dispensing nozzles, with the three-way valve 70 in the second position.

The support structure 2 advantageously comprises a fixing plate 20, which is preferably interposed and fixed between the first rails 22, at the opposite ends of the first rails 22 with respect to the ends of the first rails which are susceptible of facing the second rails 100.

The first movement means 11 are advantageously mounted on the support structure 2, preferably on the fixing plate 20 and, in accordance with the preferred embodiment, preferably comprise a pneumatic piston 110, or alternatively a hydraulic piston, which is mechanically connected to a lever 111 pivoted on the support structure 2 and rotatable around the first rotation axis R, in order to be moved in rotation by the axial movement of the pneumatic piston 110.

Alternatively, without departing from the protective scope of the present invention the first movement means 11 comprise, in accordance with a non-illustrated embodiment variant, a brushless motor or with a stepper motor provided with a rotor fixed to the corresponding coupling element, directly or alternatively by means of an intermediate element.

The metering machine 1 advantageously comprises first coupling means 12, preferably of male-female type, placed as a mechanical connection between the first movement means 11 and the three-way valve 70 in order to render them integral in rotation with each other around the first rotation axis R.

More in detail, the first coupling means 12 comprise a first coupling element 120, which is fixed to the rotary element 72 and is integral in rotation with the latter. Preferably the first coupling element 120 is attained in a single body with the rotary element 72 and is projecting from the first end of the same rotary element 72.

The first coupling element 120 advantageously has a polygonal section shape, and is preferably a parallelepiped pin.

The first coupling means 12 also comprise a second coupling element 121, which is fixed to the lever 111 and is integral in rotation with the latter.

Preferably the second coupling element 121 is attained in a single body with the lever 111 and defines a first coupling cavity, counter-shaped with respect to the first coupling element 120, which is extended in a depression.

The first coupling element 120 is therefore shaped in order to be inserted within the first coupling cavity defined by the second coupling element 121, defining a shape coupling with the latter which renders them integral in rotation around the first rotation axis R.

Of course, without departing from the protective scope of the present invention, the first coupling element 120 and the second coupling element 121 can be reversed with respect to each other, and in particular the second coupling element 121 can be fixed to the rotary element 72, while the first coupling element can be connected to the lever 111.

Advantageously the first movement means 11 and the three-way valve 70 are couplable to each other and separable along a first coupling direction Z parallel to the first rotation axis of the three-way valve 70.

The metering machine 1 advantageously comprises manipulation means 13, rotatably mounted within the hopper 4, rotatable around a second rotation axis R' (preferably parallel to the main extension direction X) and arranged for manipulating the food product contained therein.

More in detail, the manipulation means 13 comprise at least one rotary body adapted to manipulate the food product, for example in order to mix it or force it towards the discharge mouth 40" of the central body 40.

For such purpose, in accordance with the preferred embodiment, the manipulation means 13 comprise a dynamic mixer 130, which is provided with a central rotor 131 from which a plurality of mixing tabs 132 are extended, adapted to mix the food product contained within the hopper 4. Preferably the central rotor 131 is extended at least partially outside the central body 40 of the hopper 4 in which the manipulation means 13 are contained, so as to be moved in rotation around the second rotation axis R'.

The metering machine 1 also advantageously comprises second movement means 14, mounted on the support structure 2, preferably mounted on the fixing plate 20, and removably connectable to the manipulation means 13 in order to actuate in rotation the manipulation means 13 around the second rotation axis R' in order to manipulate the food product contained in the hopper 4.

In particular, the second movement means 14 comprise a motor, preferably a brushless electric motor, which is housed within a first protection casing 140, together with the electrical components well-known to the man skilled in the art and therefore not described in detail hereinbelow.

The metering machine 1 also advantageously comprises second coupling means 15, preferably of male-female type, placed as a mechanical connection between the second movement means 14 and the manipulation means 13 in order to render them integral in rotation with each other around the second rotation axis R'.

More in detail, the second coupling means 15 comprise a third coupling element 150, which is fixed to the central rotor 131 of the manipulation means 13 and is integral in rotation with the latter. Preferably the third coupling element 150 is made integrally with the aforesaid central rotor 131 and is preferably at least partially placed outside the central body 40 of the hopper 4.

The third coupling element 150 preferably has a pin-like shape.

The first coupling means 15 also advantageously comprise a fourth coupling element 151, which is fixed to the rotor of the motor of the second movement means 14 and is integral in rotation with the latter.

Preferably the second coupling element 151 is integrally made with the rotor of the motor of the second movement means 14.

The fourth coupling element 151 preferably has a fork shape and is provided with two coupling walls which together define a second coupling cavity.

The third coupling element 150 with pin shape is advantageously shaped in order to be inserted within the second coupling cavity defined by the first coupling walls of the fourth coupling element 151.

Of course, without departing from the protective scope of the present invention, the third coupling element 150 and the fourth coupling element 151 can be reversed with respect to each other, and in particular the third coupling element 151 can be fixed to the rotor of the motor of the second movement means 14, while the fourth coupling element 151 can be fixed to the central rotor 131.

Advantageously the second movement means 14 and the manipulation means 13 are couplable to each other and separable along a second coupling direction parallel to the second rotation axis R' of the manipulation means 13.

Advantageously the dispensing nozzles are rotatably mounted on the support frame 30 around a third rotation axis R" substantially orthogonal to the first rotation axis R and the second rotation axis R', in particular vertical.

The metering machine 1 advantageously comprises third movement means, mounted on the support structure 2, preferably mounted on the fixing plate 20, removably connectable to the plurality of dispensing nozzles in order to move them in rotation around the third rotation axis R".

Advantageously moreover the manipulation means 13 comprise at least one pair of rollers, not represented, which are placed within the central body 40 of the hopper 4 and are counter-rotating with respect to each other, in order to force the food product towards the discharge mouth 40" of the hopper 4, in particular in the case of semi-solid food products.

The pair of rollers is advantageously mounted on the central body 40 and the rollers are each provided with an actuation end thereof at least partially placed outside the central body 40, such that it can be actuated in rotation from the outside.

For such purpose, the metering machine 1 also advantageously comprises fourth movement means, for example a second electric motor, mounted on the support structure 2, preferably mounted on the fixing plate 20, and removably connectable to the rollers in order to actuate them in rotation.

The metering machine 1 also advantageously comprises fourth coupling means, preferably of male-female type, placed as a mechanical connection between the fourth movement means and the pair of rollers in order to render them integral in rotation with each other.

More in detail, the fourth coupling means advantageously comprise two fork bodies, mechanically connected to the second electric motor of the fourth movement means and integral in rotation with the latter.

More in detail, the fourth coupling means advantageously also comprise two pin elements, each of which is fixed to a roller of the pair of rollers and is integral in rotation with the latter.

The pin elements are therefore advantageously shaped for engaging the fork bodies, defining with the latter a shape coupling that renders the integral in rotation.

The metering group 3 also comprises actuation means 8, mounted on the support structure 2, comprising a plurality of first actuator elements 81 in order to move the stems 61 between the suction position and the dispensing position.

The first actuator elements 81 are advantageously provided with a head end 81' which is preferably tapered, while the stems are advantageously provided with a rear end, which is provided with a housing depression, within which the head end 81' of the first actuator element 81 is susceptible of being at least partially housed in order to increase the mechanical coupling between the stem 61 and the first actuator element 81.

In accordance with the preferred embodiment the actuation means 8 advantageously comprise at least one rotary motor 80, preferably a brushless electric motor, and motion transformation means 82, which are interposed between the rotary motor 80 and the first actuator elements 81 in order to transform the rotary motion of the motor 80 in a linear motion of the first actuator elements 81, in particular along a translation direction W (substantially orthogonal to the extraction direction T).

Otherwise, without departing from the protective scope of the present invention the actuation means 8 comprise a linear actuator, e.g. pneumatic or hydraulic, which is mechanically connected to the first actuator elements 81 in order to move them linearly.

In accordance with the aforesaid preferred embodiment, the motion transformation means 82 advantageously comprise a toothed wheel 820, integral in rotation with the rotor of the rotary motor 80, and a rack 821, coupled to the toothed wheel 820 in order to receive, from the latter, a rotary motion and transform it into a linear motion.

Advantageously moreover the actuation means 8 comprise a trolley 83, which is extended between a first end 83', fixed to the rack 821, and a second end 83", at which the first actuator elements 81 are mounted, preferably fixed, preferably equidistant from each other along the entire transverse extension of the trolley 83. The trolley 83 advantageously comprises a guide portion, which is integral with the support structure 2, and a movable portion, fixed to the rack 821, slidably engaged with the guide portion and on which the first actuator elements 81 are mounted. In this manner the first actuator elements 81 are moved in a manner synchronized with each other and can be moved by means of a single rotary motor 80.

Advantageously, in accordance with the preferred embodiment, the actuation means 8 comprise two rotary motors 80 and the motion transformation means 82 comprise two toothed wheels 820 and two racks 821, and each of such toothed wheels 820 and racks 821 is associated with a separate rotary motor 80.

More in detail, the rotary motors 80 are preferably placed laterally to the trolley 83, from opposite sides of the latter and such arrangement allows a greater stability of the system and a more precise and secure movement.

The metering group 3 also comprises a plurality of coupling means 9, which are configured for mechanically connecting the first actuator elements 81 to the stems 61 of the pistons 6 with the support frame 30 in the operative position A and are configured for mechanically disconnecting the first actuator elements 81 from the stems 61 of the pistons 6 in order to move the support frame 30 towards the maintenance position B.

In this manner when the support frame 30 is situated in the operative position A, the coupling means 9 connect the first actuator elements 81 to the stems 61 of the pistons 6 and the metering group 3 is ready for metering the food product contained therein. Otherwise, at the end of the processing, the coupling means 9 are actuatable for disconnecting the first actuator elements 81 from the stems 61 of the pistons 6 in order to allow the movement of the metering group 3 along the guide means 21 of the support structure 2 in order to bring the same metering group 3 from the operative position A towards the maintenance position B and therefore allow its separation from the support structure 2 in order to execute the normal cleaning operations.

In particular, the coupling means 9 are actuatable in order to place the first actuator elements 81 and the pistons 6 in a first configuration, in which the first actuator elements 81 are mechanically connected to the stems 61 of the pistons 6, and in a second configuration, in which the first actuator elements 81 are mechanically disconnected from the stems 61 of the pistons 6.

Advantageously the coupling means 9 comprise a plurality of coupling elements 91, each of which is mechanically connected to a corresponding first actuator element 81 and is movable between a coupling position, in which is engaged with a corresponding stem 61 in order to render the first actuator element 81 and the stem 61 integral, and an uncoupling position, in which is disengaged from the stem 61 in order to render the first actuator element 81 and the stem 61 independent of each other.

More in detail, each coupling element 91 is advantageously rotatably connected, and preferably hinged, to a corresponding first actuator element 81.

Advantageously the coupling means 9 also comprise a plurality of second actuator elements 92, each of which is mechanically connected to one of the coupling elements 91 in order to move it between the coupling position and the uncoupling position.

In particular, each second actuator element 92 comprises a pneumatic actuator, or alternatively hydraulic, which is preferably fixed to a corresponding first actuator element 81 and is provided with a movable thrust element 920, which is mechanically connected, and preferably hinged, to a coupling element 91.

The coupling element 91 advantageously comprises a connection portion 910, which is pivoted to the thrust element 920.

The coupling element 91 advantageously comprises a coupling portion 911, fixed to the connection portion 910 and preferably provided with a curved profile, substantially hook-like. In particular, the coupling portion 911 is rotatably connected, and preferably hinged, to the corresponding first actuator element 81.

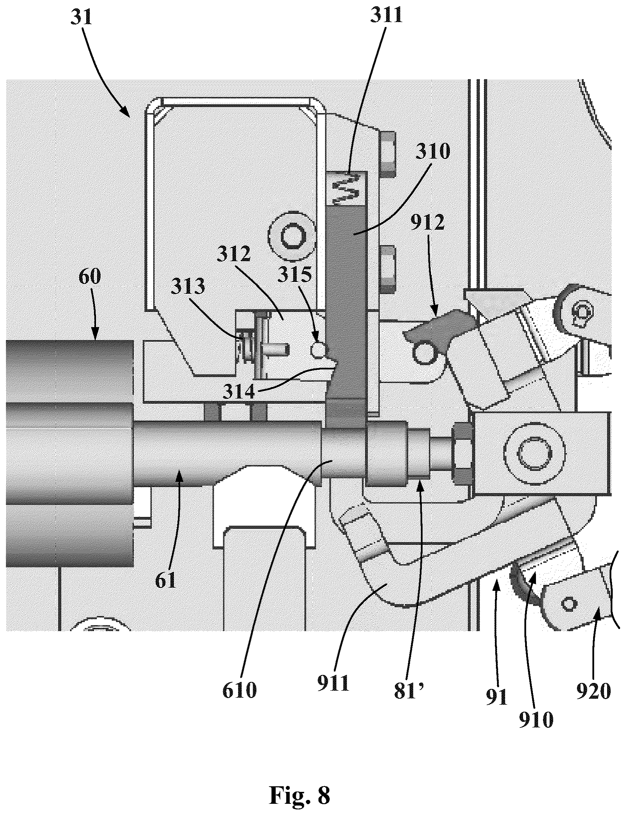

In accordance with the preferred embodiment, illustrated in figure 8, each stem 61 of the piston 6 comprises a coupling groove 610, made at the rear end of the stem 61, outside the containment chamber 60. Preferably the aforesaid coupling groove 610 is made along the entire external circumference of the stem 61 and is advantageously engageable by the coupling portion 911 of the coupling element 91, in order to render integral in translation the first actuator elements 81 and the stem 61.

More in detail, in operation, the second actuator elements 92 are actuatable in order to rotate the coupling element 91 between the coupling position, in which the coupling portion 911 engages the coupling groove 610 of the stem 61, in order to render the first actuator element 81 and the stem 61 integral, and the uncoupling position, in which the coupling portion 911 disengages the coupling groove 610 of the stem 61 in order to render the first actuator element 81 and the stem 61 independent of each other.

Advantageously the metering group 3 comprises blocking means 31, which comprise a plurality of blocking elements 310, each of which is mounted on the support frame 30 and is selectively engageable with a corresponding stem 61.

The blocking elements 310 are advantageously movable, preferably along a direction substantially orthogonal to the translation direction W, between a blocking position, in which each blocking element 310 engages a corresponding stem 61, preferably its coupling groove 610, in order to prevent an axial movement thereof, and a release position, in which is disengaged from the stem 61 in order to allow the axial movement thereof.

More in detail, the blocking means 31 comprise first elastic elements 311, each of which is interposed between the support frame 30 and a blocking element 310 and exerts an elastic force on the latter in order to move it constantly towards the aforesaid blocking position. Advantageously in the blocking position the blocking elements 310 at least partially engage the coupling groove 610 made on the corresponding stem 61, so as to prevent its translation along the translation direction W.

The blocking means 31 also comprise a plurality of stop elements 312, one for each blocking element 310, which are movable, preferably along a direction substantially parallel to the translation direction W, between a stop position, in which the stop element 312 prevents the movement of the blocking element 310 towards the blocking position, and a release position, in which the stop element 312 allows the movement of the blocking element 310 towards the blocking position.

More in detail, the blocking elements 310 are advantageously provided, on a lateral wall thereof, with an engagement seat 314 which is extended in a depression on the aforesaid lateral wall along a direction substantially parallel to the translation direction W. Each stop element 312 is advantageously provided with an abutment element 315, which is susceptible of engaging the aforesaid engagement seat 314 in order to prevent the movement of the blocking element 310 towards the blocking position.

The blocking means 31 advantageously comprise second elastic elements 313 and each stop element 312 is advantageously connected to the support frame 30, with one of the second elastic elements 313 interposed, which exerts an elastic force on the corresponding stop element 312 in order to move it constantly towards the aforesaid stop position.

Advantageously each coupling element 91 is provided with an actuation portion 912, which is extended opposite with respect to the coupling portion 911 with respect to a hinging point between coupling element 91 and first actuator element 81. The aforesaid actuation portion 912 is configured for cooperating with the stop element 312, when the coupling element 91 is moved from the corresponding second actuator element 82, in order to disengage the abutment element 315 of the stop element 312 from the engagement seat 314 of the blocking element 310, allowing the movement of the latter towards the blocking position. In this manner, the movement of the coupling element 91 from the coupling position to the uncoupling position corresponds with the movement of the blocking element 310 from the release position to the blocking position.

On the contrary, the coupling portion 911 of the coupling element 91 is configured for cooperating with the blocking element 310, when the coupling element 91 is moved from the corresponding second actuator element 82, in order to disengage the blocking element 310 from the coupling groove 610 of the stem 61 and allows its movement from the blocking position to the release position. In this manner, following the movement of the coupling element 91 from the uncoupling position to the coupling position corresponds with the movement of the blocking element 310 from the blocking position to the release position.

The metering machine thus conceived therefore attains the pre-established objects.

## Claims

1. Metering machine for metering and/or injecting food products which comprises:
- a fixed support structure (2) extended along a first main extension direction (X) and provided with guide means (21);
- a movable metering group (3) comprising:
- a support frame (30), removably and slidably mounted on the guide means (21) of said support structure (2) in order to be moved between an operative position (A) and a maintenance position (B) along an extraction direction (T) substantially parallel to said first main extension direction (X);
- at least one hopper (4) for containing a food product, which is mechanically connected to said support frame (30);
- a plurality of dispensing nozzles mechanically connected to said support frame (30);
wherein said metering group also comprises:
- a plurality of pistons (6) for the volumetric metering of the food product, each mechanically connected to said support frame (30), and comprising a containment chamber (60) selectively and hydraulically connectable to said hopper (4) and to said dispensing nozzles, and a stem (61) sealingly slidable within said containment chamber (60), along a rectilinear slide direction substantially orthogonal to said extraction direction (T), between a suction position, in which said stem (61) suctions said food product from said hopper (4) within said containment chamber (60), and a dispensing position, in which said stem (61) forces said food product from said containment chamber (60) to said plurality of dispensing nozzles;
- hydraulic connection means (7) mechanically connected to said support frame (30), hydraulically interposed between said hopper (4), the containment chambers (60) of said pistons (6) and said dispensing nozzles in order to selectively place said containment chambers (60) in hydraulic communication with said hopper (4) and with said dispensing nozzles;
- actuation means (8), mounted on said support structure (2), comprising a plurality of first actuator elements (81) in order to move said stems (61) between said suction position and said dispensing position;
- a plurality of coupling means (9), which are configured for mechanically connecting said first actuator elements (81) to the stems (61) of said pistons (6) with said support frame (30) in said operative position (A) and are configured for mechanically disconnecting said first actuator elements (81) from the stems (61) of said pistons (6) in order to move said support frame (30) towards said maintenance position (B).

2. Metering machine according to claim 1, **characterized in that** said coupling means (9) comprise:
- a plurality of coupling elements (91), each of which is mechanically connected to a corresponding said first actuator element (81) and is movable between a coupling position, in which said coupling element (91) is engaged with a corresponding said stem (61) in order to render said first actuator element (81) and said stem (61) integral, and an uncoupling position, in which said coupling element (91) is disengaged from said stem (61) in order to render said first actuator element (81) and said stem (61) independent of each other;
- a plurality of second actuator elements (92), each of which is mechanically connected to one of said coupling elements (91) in order to move it between said coupling position and said uncoupling position.

3. Metering machine according to claim 2, **characterized in that** said metering group (3) comprises blocking means (31), which comprise a plurality of blocking elements (310), each of which is mounted on said support frame (30) and is selectively engageable with a corresponding stem (61);
said blocking elements (310) being movable between a blocking position, in which each of said blocking elements (310) engages a corresponding said stem (61) in order to prevent an axial movement of said stem (61), and a release position, in which it disengages said stem (61) in order to allow said axial movement.

4. Metering machine according to any one of the preceding claims, **characterized in that** the guide means (21) of said support structure (2) comprise at least two first rails (22), substantially parallel to each other, and said support frame (30) comprises at least two slide elements (300), each of which slidably associated with one of said first rails (22) in order to guide the movement of said support frame (30) along said support structure (2) between said operative position (A) and said maintenance position (B).

5. Metering machine according to claim 4, **characterized in that** it comprises a support trolley (10), provided with at least two second rails (100), substantially parallel to each other, and on such second rails (100), said support frame (30) is susceptible of sliding;
said support trolley (10) being flankable to said support structure (2), with said second rails (100) substantially aligned with the first rails (22) of said support structure (2) in order to support said metering group (3) with said metering group (3) separated from said support structure (2).

6. Metering machine according to any one of the preceding claims, **characterized in that** said hydraulic connection means (7) comprise at least one three-way valve (70), rotatably connected to said support frame (30) around a first rotation axis (R) between at least one first position, in which said three-way valve (70) is placed as a hydraulic connection between the containment chamber (60) of said pistons (6) and said hopper (4), and a second position, in which said three-way valve (70) is placed as a hydraulic connection between the containment chamber (60) of said pistons (6) and said dispensing nozzles;
said metering machine comprising first movement means (11), mounted on said support structure (2), removably connectable to said three-way valve (70) in order to rotate said three-way valve (70) between said first position and said second position.

7. Metering machine according to claim 6, **characterized in that** it comprises first coupling means (12), placed as a mechanical connection between said first movement means (11) and said three-way valve (70) in order to render them integral in rotation with each other around said first rotation axis (R);
said first movement means (11) and said three-way valve (70) being couplable to each other and separable along a first coupling direction (Z) parallel to the first rotation axis (R) of said three-way valve (70).

8. Metering machine according to any one of the preceding claims, **characterized in that** it comprises:
- manipulation means (13), rotatably mounted within said hopper (4), rotatable around a second rotation axis (R') and arranged for manipulating said food product;
- second movement means (14), mounted on said support structure (2) and removably connectable to said manipulation means (13) in order to actuate in rotation said manipulation means (13) around said second rotation axis (R') in order to manipulate said food product contained in said hopper (4).

9. Metering machine according to claim 8, **characterized in that** it comprises second coupling means (15), placed as a mechanical connection between said second movement means (14) and said manipulation means (13) in order to render them integral in rotation around said second rotation axis (R');
said manipulation means (13) and said second movement means (14) being couplable to each other and separable along a second coupling direction parallel to the second rotation axis (R') of said manipulation means (13).

10. Metering machine according to any one of the preceding claims, **characterized in that** said plurality of dispensing nozzles are rotatably mounted on said support frame (30) around a third rotation axis (R") substantially orthogonal to said first rotation axis (R) and to said second rotation axis (R');
said metering machine comprising third movement means, mounted on said support structure (2), removably connectable to said plurality of dispensing nozzles in order to move them in rotation around said third rotation axis (R").

## Patentansprüche

1. Dosiermaschine zum Dosieren und/oder Injizieren von Nahrungsmitteln, die Folgendes umfasst:
- eine fixe Stützstruktur (2), die sich entlang einer ersten Hauptausdehnungsrichtung (X) erstreckt und mit Führungsmitteln (21) versehen ist;
- eine bewegbare Dosiergruppe (3), die Folgendes umfasst:
- einen Stützrahmen (30), der entfernbar und verschiebbar auf den Führungsmitteln (21) der Stützstruktur (2) montiert ist, um zwischen einer Betriebsposition (A) und einer Wartungsposition (B) entlang einer Extraktionsrichtung (T), die im Wesentlichen parallel zur ersten Hauptausdehnungsrichtung (X) verläuft, bewegt zu werden;
- mindestens einen Trichter (4) zum Enthalten eines Nahrungsmittels, der mechanisch mit dem Stützrahmen (30) verbunden ist;
- eine Vielzahl von Ausgabedüsen, die mechanisch mit dem Stützrahmen (30) verbunden sind,
wobei die Dosiergruppe auch Folgendes umfasst:
- eine Vielzahl von Kolben (6) zum volumetrischen Dosieren des Nahrungsmittels, wobei ein jeder mechanisch mit dem Stützrahmen (30) verbunden ist und eine Aufnahmekammer (60), die wahlweise und hydraulisch mit dem Trichter (4) und mit den Ausgabedüsen verbindbar ist, und eine Kolbenstange (61) umfasst, die abdichtend innerhalb der Aufnahmekammer (60) entlang einer geraden Verschieberichtung im Wesentlichen horizontal zur Extraktionsrichtung (T) zwischen einer Saugposition, in der die Kolbenstange (61) das Nahrungsmittel aus dem Trichter (4) in die Aufnahmekammer (60) saugt, und einer Ausgabeposition, in der die Kolbenstange (61) das Nahrungsmittel von der Aufnahmekammer (60) zu der Vielzahl von Ausgabedüsen forciert, verschiebbar ist;
- hydraulische Verbindungsmittel (7), die mechanisch mit dem Stützrahmen (30) verbunden sind, hydraulisch zwischen dem Trichter (4), den Aufnahmekammern (60) der Kolben (6) und den Ausgabedüsen eingesetzt sind, um die Aufnahmekammern (60) wahlweise in hydraulischer Kommunikation mit dem Trichter (4) und mit den Ausgabedüsen zu platzieren;
- Betätigungsmittel (8), die auf der Stützstruktur (2) montiert sind, umfassend eine Vielzahl von ersten Aktuatorelementen (81), um die Kolbenstangen (61) zwischen der Saugposition und der Ausgabeposition zu bewegen;
- eine Vielzahl von Kupplungsmitteln (9), die ausgelegt sind, um die ersten Aktuatorelemente (81) mechanisch mit den Kolbenstangen (61) der Kolben (6) zu verbinden, während sich der Stützrahmen (30) in der Betriebsposition (A) befindet, und die ausgelegt sind, um die ersten Aktuatorelemente (81) mechanisch von den Kolbenstangen (61) der Kolben (6) zu trennen, um den Stützrahmen (30) hinführend zur Wartungsposition (B) zu bewegen.

2. Dosiermaschine nach Anspruch 1, **dadurch gekennzeichnet, dass** die Kupplungsmittel (9) Folgendes umfassen:
- eine Vielzahl von Kupplungselementen (91), von denen ein jedes mechanisch mit einem entsprechenden ersten Aktuatorelement (81) verbunden ist und zwischen einer Kupplungsposition, in der das Kupplungselement (91) mit einer entsprechenden Kolbenstange (61) im Eingriff ist, um zu bewirken, dass das erste Kupplungselement (81) fest mit der Kolbenstange (61) verbunden wird, und einer Entkupplungsposition, in der das Kupplungselement (91) von der Kolbenstange (61) gelöst ist, um zu bewirken, dass das erste Aktuatorelement (81) und die Kolbenstange (61) unabhängig voneinander werden, bewegbar ist;
- eine Vielzahl von zweiten Aktuatorelementen (92), von denen ein jedes mechanisch mit einem der Kupplungselemente (91) verbunden ist, um dieses zwischen der Kupplungsposition und der Entkupplungsposition zu bewegen.

3. Dosiermaschine nach Anspruch 2, **dadurch gekennzeichnet, dass** die Dosiergruppe (3) Blockiermittel (31) umfasst, die eine Vielzahl von Blockierelementen (310) umfassen, von denen ein jedes auf dem Stützrahmen (30) montiert ist und wahlweise mit einer entsprechenden Kolbenstange (61) in Eingriff gelangen kann,
wobei diese Blockierelemente (310) zwischen einer Blockierposition, in der ein jedes der Blockierelemente (310) mit einer entsprechenden Kolbenstange (61) im Eingriff ist, um eine axiale Bewegung der Kolbenstange (61) zu vermeiden, und einer Freigabeposition, in der es die Kolbenstange (61) löst, um die axiale Bewegung zu erlauben, bewegbar ist.

4. Dosiermaschine nach einem der vorhergehenden Ansprüche, **dadurch gekennzeichnet, dass** die Führungsmittel (21) der Stützstruktur (2) mindestens zwei erste Schienen (22) umfassen, die im Wesentlichen parallel zueinander sind, und dass der Stützrahmen (30) mindestens zwei Schiebeelemente (300) umfasst, von denen ein jedes verschiebbar mit einer der ersten Schienen (22) assoziiert ist, um die Bewegung des Stützrahmens (30) entlang der Stützstruktur (2) zwischen der Betriebsposition (A) und der Wartungsposition (B) zu führen.

5. Dosiermaschine nach Anspruch 4, **dadurch gekennzeichnet, dass** sie einen Stützwagen (10) umfasst, der mit mindestens zwei zweiten Schienen (100) versehen ist, die im Wesentlichen parallel zueinander sind, wobei der Stützrahmen (30) ausgelegt ist, um auf diesen zweiten Schienen (100) verschoben zu werden,
wobei der Stützwagen (10) neben der Stützstruktur (2) flankierbar ist, während die zweiten Schienen (100) im Wesentlichen fluchtend zu den ersten Schienen (22) der Stützstruktur (2) ausgerichtet sind, um die Dosiergruppe (3) zu stützen, während die Dosiergruppe (3) von der Stützstruktur (2) getrennt ist.

6. Dosiermaschine nach einem der vorhergehenden Ansprüche, **dadurch gekennzeichnet, dass** die hydraulischen Verbindungsmittel (7) mindestens ein Drei-Wege-Ventil (70) umfassen, das drehbar mit dem Stützrahmen (30) rund um eine erste Rotationsachse (R) zwischen einer ersten Position, in der das Drei-Wege-Ventil (70) als hydraulische Verbindung zwischen der Aufnahmekammer (60) der Kolben (6) und dem Trichter (4) platziert ist, und einer zweiten Position, in der das Drei-Wege-Ventil (70) als hydraulische Verbindung zwischen der Aufnahmekammer (60) der Kolben (6) und den Ausgabedüsen platziert ist, verbunden ist,
wobei die Dosiermaschine erste Bewegungsmittel (11) umfasst, die auf der Stützstruktur (2) montiert und entfernbar mit dem Drei-Wege-Ventil (70) verbindbar sind, um das Drei-Wege-Ventil (70) zwischen der ersten Position und der zweiten Position zu drehen.

7. Dosiermaschine nach Anspruch 6, **dadurch gekennzeichnet, dass** sie erste Kupplungsmittel (12) umfasst, die als mechanische Verbindung zwischen den ersten Bewegungsmitteln (11) und dem Drei-Wege-Ventil (70) platziert sind, um zu bewirken, dass sich diese fest verbunden miteinander um die erste Rotationsachse (R) drehen,
wobei die ersten Bewegungsmittel (11) und das Drei-Wege-Ventil (70) miteinander entlang einer ersten Kupplungsrichtung (Z) parallel zur ersten Rotationsachse (R) des Drei-Wege-Ventils (70) miteinander kuppelbar und voneinander trennbar sind.

8. Dosiermaschine nach einem der vorhergehenden Ansprüche, **dadurch gekennzeichnet, dass** sie Folgendes umfasst:
- Handhabungsmittel (13), die drehbar in dem Trichter (4) montiert, um eine zweite Rotationsachse (R') drehbar und angeordnet sind, um das Nahrungsmittel zu handhaben,
- zweite Bewegungsmittel (14), die auf der Stützstruktur (2) montiert und entfernbar mit den Handhabungsmitteln (13) verbindbar sind, um die Handhabungsmittel (13) rund um die zweite Rotationsachse (R') in Drehung zu versetzen, um das im Trichter (4) enthaltene Nahrungsmittel zu handhaben.

9. Dosiermaschine nach Anspruch 8, **dadurch gekennzeichnet, dass** sie zweite Kupplungsmittel (15) umfasst, die als mechanische Verbindung zwischen den zweiten Bewegungsmitteln (14) und den Handhabungsmitteln (13) platziert sind, um zu bewirken, dass sich diese fest verbunden miteinander um die zweite Rotationsachse (R') drehen, wobei die Handhabungsmittel (13) und die Bewegungsmittel (14) entlang einer zweiten Kupplungsrichtung parallel zur zweiten Rotationsachse (R') der Handhabungsmittel (13) miteinander kuppelbar und voneinander trennbar sind.

10. Dosiermaschine nach einem der vorhergehenden Ansprüche, **dadurch gekennzeichnet, dass** die Vielzahl von Ausgabedüsen drehbar auf dem Stützrahmen (30) rund um eine dritte Rotationsachse (R") im Wesentlichen rechtwinkelig zur ersten Rotationsachse (R) und zur zweiten Rotationsachse (R') montiert ist,
wobei die Dosiermaschine dritte Bewegungsmittel umfasst, die auf der Stützstruktur (2) montiert und entfernbar mit der Vielzahl von Ausgabedüsen verbindbar sind, um diese rund um die dritte Rotationsachse (R") in Drehung zu versetzen.

## Revendications

1. Machine de dosage pour doser et/ou injecter des produits alimentaires qui comprend :
- une structure de support fixe (2) s'étendant le long d'une première direction d'extension principale (X) et munie de moyens de guidage (21) ;
- un groupe de dosage mobile (3) comprenant :
- un cadre de support (30), monté de manière amovible et coulissante sur les moyens de guidage (21) de ladite structure de support (2) de manière à être déplacé entre une position opérationnelle (A) et une position de maintenance (B) le long d'une direction d'extraction (T) substantiellement parallèle à ladite première direction d'extension principale (X) ;
- au moins une trémie (4) pour contenir un produit alimentaire, qui est connectée mécaniquement audit cadre de support (30) ;
- une pluralité de buses de distribution connectées mécaniquement audit cadre de support (30) ;
dans laquelle ledit groupe de dosage comprend également :
- une pluralité de pistons (6) pour le dosage volumétrique du produit alimentaire, chacun connecté mécaniquement audit cadre de support (30), et comprenant une chambre de confinement (60) connectable de manière sélective et de manière hydraulique à ladite trémie (4) et auxdites buses de distribution, et une tige (61) pouvant coulisser de manière étanche à l'intérieur de ladite chambre de confinement (60), le long d'une direction de coulissement rectiligne substantiellement orthogonale à ladite direction d'extraction (T), entre une position d'aspiration, dans laquelle ladite tige (61) aspire ledit produit alimentaire depuis ladite trémie (4) à l'intérieur de ladite chambre de confinement (60), et une position de distribution, dans laquelle ladite tige (61) force ledit produit alimentaire de ladite chambre de confinement (60) à ladite pluralité de buses de distribution ;
- des moyens de connexion hydraulique (7) connectés mécaniquement audit cadre de support (30), interposés de manière hydraulique entre ladite trémie (4), les chambres de confinement (60) desdits pistons (6) et lesdites buses de distribution de manière à placer de manière sélective lesdites chambres de confinement (60) en communication hydraulique avec ladite trémie (4) et avec lesdites buses de distribution ;
- des moyens d'actionnement (8), montés sur ladite structure de support (2), comprenant une pluralité de premiers éléments actionneurs (81) de manière à déplacer lesdites tiges (61) entre ladite position d'aspiration et ladite position de distribution ;
- une pluralité de moyens de couplage (9), qui sont configurés pour connecter mécaniquement lesdits premiers éléments actionneurs (81) aux tiges (61) desdits pistons (6) avec ledit cadre de support (30) dans ladite position opérationnelle (A) et sont configurés pour déconnecter mécaniquement lesdits premiers éléments actionneurs (81) des tiges (61) desdits pistons (6) de manière à déplacer ledit cadre de support (30) vers ladite position de maintenance (B).

2. Machine de dosage selon la revendication 1, **caractérisée en ce que** lesdits moyens de couplage (9) comprennent :
- une pluralité d'éléments de couplage (91), dont chacun est connecté mécaniquement à un dit premier élément actionneur correspondant (81) et est mobile entre une position de couplage, dans laquelle ledit élément de couplage (91) est engagé avec une dite tige correspondante (61) de manière à rendre ledit premier élément actionneur (81) et ladite tige (61) solidaires, et une position de découplage, dans laquelle ledit élément de couplage (91) est désengagé de ladite tige (61) de manière à rendre ledit premier élément actionneur (81) et ladite tige (61) indépendants l'un de l'autre ;
- une pluralité de seconds éléments actionneurs (92), dont chacun est connecté mécaniquement à l'un desdits éléments de couplage (91) de manière à le déplacer entre ladite position de couplage et ladite position de découplage.

3. Machine de dosage selon la revendication 2, **caractérisée en ce que** ledit groupe de dosage (3) comprend des moyens de blocage (31), qui comprennent une pluralité d'éléments de blocage (310), dont chacun est monté sur ledit cadre de support (30) et peut être engagé de manière sélective avec une tige correspondante (61) ;
lesdits éléments de blocage (310) étant mobiles entre une position de blocage, dans laquelle chacun desdits éléments de blocage (310) engage une dite tige correspondante (61) de manière à empêcher un mouvement axial de ladite tige (61), et une position de libération, dans laquelle il désengage ladite tige (61) de manière à permettre ledit mouvement axial.

4. Machine de dosage selon l'une quelconque des revendications précédentes, **caractérisée en ce que** les moyens de guidage (21) de ladite structure de support (2) comprennent au moins deux premiers rails (22), substantiellement parallèles l'un à l'autre, et ledit cadre de support (30) comprend au moins deux éléments coulissants (300), dont chacun est associé de manière coulissante à l'un desdits premiers rails (22) de manière à guider le mouvement dudit cadre de support (30) le long de ladite structure de support (2) entre ladite position opérationnelle (A) et ladite position de maintenance (B).

5. Machine de dosage selon la revendication 4, **caractérisée en ce qu'**elle comprend un chariot de support (10), muni d'au moins deux seconds rails (100), substantiellement parallèles l'un à l'autre, et sur ces seconds rails (100), ledit cadre de support (30) est susceptible de glisser ;
ledit chariot de support (10) pouvant être flanqué de ladite structure de support (2), lesdits seconds rails (100) étant substantiellement alignés sur les premiers rails (22) de ladite structure de support (2) de manière à supporter ledit groupe de dosage (3) avec ledit groupe de dosage (3) séparé de ladite structure de support (2).

6. Machine de dosage selon l'une quelconque des revendications précédentes, **caractérisée en ce que** lesdits moyens de connexion hydraulique (7) comprennent au moins une vanne à trois voies (70), connectée de manière rotative audit cadre de support (30) autour d'un premier axe de rotation (R) entre au moins une première position, dans laquelle ladite vanne à trois voies (70) est placée en tant qu'une connexion hydraulique entre la chambre de confinement (60) desdits pistons (6) et ladite trémie (4), et une seconde position, dans laquelle ladite vanne à trois voies (70) est placée en tant qu'une connexion hydraulique entre la chambre de confinement (60) desdits pistons (6) et lesdites buses de distribution ;
ladite machine de dosage comprenant des premiers moyens de mouvement (11), montés sur ladite structure de support (2), connectables de manière amovible à ladite vanne à trois voies (70) de manière à faire tourner ladite vanne à trois voies (70) entre ladite première position et ladite seconde position.

7. Machine de dosage selon la revendication 6, **caractérisée en ce qu'**elle comprend des premiers moyens de couplage (12), placés en tant qu'une connexion mécanique entre lesdits premiers moyens de mouvement (11) et ladite vanne à trois voies (70) de manière à les rendre solidaires en rotation les uns avec les autres autour dudit premier axe de rotation (R) ; lesdits premiers moyens de mouvement (11) et ladite vanne à trois voies (70) pouvant être couplés l'un à l'autre et séparés le long d'une première direction de couplage (Z) parallèle au premier axe de rotation (R) de ladite vanne à trois voies (70).

8. Machine de dosage selon l'une quelconque des revendications précédentes, **caractérisée en ce qu'**elle comprend :
- des moyens de manipulation (13), montés de manière rotative à l'intérieur de ladite trémie (4), rotatifs autour d'un deuxième axe de rotation (R') et agencés pour manipuler ledit produit alimentaire ;
- des deuxièmes moyens de mouvement (14), montés sur ladite structure de support (2) et connectables de manière amovible auxdits moyens de manipulation (13) de manière à actionner en rotation lesdits moyens de manipulation (13) autour dudit deuxième axe de rotation (R') de manière à manipuler ledit produit alimentaire contenu dans ladite trémie (4).

9. Machine de dosage selon la revendication 8, **caractérisée en ce qu'**elle comprend des deuxièmes moyens de couplage (15), placés en tant qu'une connexion mécanique entre lesdits deuxièmes moyens de mouvement (14) et lesdits moyens de manipulation (13) de manière à les rendre solidaires en rotation autour dudit deuxième axe de rotation (R') ; lesdits moyens de manipulation (13) et lesdits deuxièmes moyens de mouvement (14) pouvant être couplés l'un à l'autre et séparés le long d'une seconde direction de couplage parallèle au deuxième axe de rotation (R') desdits moyens de manipulation (13).

10. Machine de dosage selon l'une quelconque des revendications précédentes, **caractérisée en ce que** ladite pluralité de buses de distribution sont montées de manière rotative sur ledit cadre de support (30) autour d'un troisième axe de rotation (R") substantiellement orthogonal audit premier axe de rotation (R) et audit deuxième axe de rotation (R') ;
ladite machine de dosage comprenant des troisièmes moyens de mouvement, montés sur ladite structure de support (2), connectables de manière amovible à ladite pluralité de buses de distribution de manière à les déplacer en rotation autour dudit troisième axe de rotation (R").
